(19)

Europäisches
Patentamt
European
Patent Office
Office européen
des brevets

(11) **EP 3 660 056 A1**

(12) **EUROPEAN PATENT APPLICATION**

(43) Date of publication:
**03.06.2020   Bulletin 2020/23**

(51) Int Cl.:
**C08B 15/04** (2006.01)        **C08B 15/06** (2006.01)
**D21C 9/10** (2006.01)        **D06M 15/15** (2006.01)

(21) Application number: **18209503.4**

(22) Date of filing: **30.11.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Universität für Bodenkultur Wien 1180 WIEN (AT)**

(72) Inventors:
- **Gübitz, Georg**
  **1180 Wien (AT)**
- **Pellis, Alessandro**
  **1180 Wien (AT)**
- **Haske-Cornelius, Oskar**
  **1180 Wien (AT)**

(74) Representative: **Pföstl, Andreas**
**Schwarz & Partner Patentanwälte**
**Wipplingerstraße 30**
**1010 Wien (AT)**

(54) **METHOD FOR IMMOBILIZING MOLECULES ON A CELLULOSIC MATERIAL**

(57)    The present invention relates to a method for covalently binding at least one amino acid, at least one peptide and/or at least one polypeptide to a cellulosic material comprising cellulose and/or cellulose derivatives comprising free hydroxyl groups comprising the steps of

a) subjecting the cellulosic material to an aqueous solution, ionic liquids, deep eutectic solvents, organic solvents or mixtures, comprising at least one oxidizing agent and

b) binding said at least one amino acid, at least one peptide and/or at least one polypeptide to said cellulosic material.

EP 3 660 056 A1

**Description**

TECHNICAL FIELD

The present invention relates to means and methods for immobilizing amino acid residues, peptides and polypeptides on a material comprising cellulose or derivatives thereof.

BACKGROUND ART

Cellulose (and cellulose derivatives) is the most abundant polymer on our planet with a wide range of applications varying from the classic pulp and paper products and foodstuff to cosmetics, coatings, laminates, optical films and sorption media. Cellulose is the most promising biopolymer for the production of sustainable and biocompatible products in the world. In 2004 Europe, North America and Asia accounted for more than 90% of total paper and paperboard consumption, which reflects a 360 million tons annual production. Pulp and paper products, especially printing and writing papers, are an important worldwide consumer product, but due to the progressing digitalisation, it was forecasted that their demand would be 76.7-87.1 million tons lower by 2030 than estimated in earlier studies. This development makes it necessary to find new market opportunities for pulp and paper products. Surface functionalization or addition of catalytic functions to paper opens new areas for unconventional applications and high value products based on pulp and paper. Cellulose fibres and sheets are a suitable material for functionalization because of their unique properties like, biocompatibility, porosity, flexibility or simple and cheap fabrication methods. Various surface functionalization for paper like addition of metal nanoparticles (Hui, Y. et al., 2011. Advances in Colloid and Interface Science, 163(1), pp.23-38.), single-stranded probe DNA coupling (Araujo, A. C. et al. (2012), Analytical Chemistry, 84, pp. 3311-3317) or grafting of different polymers (Nishio, Y. (2006), Advances in Polymer Science, 205, pp. 97-151) are known. Among other properties, hydrophobicity is desired for applications such as coating of materials (Ortner, A. et al. (2017) Green Chemistry. Royal Society of Chemistry, 19(3), pp. 816-822.).

Hydrophobins are small cysteine-rich proteins that were originally isolated from fungi where they are an essential component of their hydrophobic rodlet layers. They have the ability to form amphipathic films when confronted with a hydrophilic-hydrophobic interface. This feature makes them promising candidates for modifying the surface properties of a material permanently when bound covalently without losing the amphipathic character. Surface functionalization was shown by Scholtmeijer et. al. (Bio-mediacal materials and engineering, 14(2004), pp. 447-454) using engineered hydrophobins on Teflon. The same group successfully reported changes of the N-terminus of the protein without altering its gross properties. Such modification made it possible to use the N-terminus of the protein to couple it to a surface using the EDAC/NHS system. This system revealed its ability to crosslink carboxylic groups and amide groups in several substances like collagens (Damink, L. H. H. O. et al. (1996), Biomaterials, 17(8), pp. 765-773.), poly(acrylic acid) on silicon (Wang, C. et al. (2011), Langmuir, 27(19), pp. 12058-12068.) and chitosan on triblock copolymers (Chung, H. J. et al. (2005) ', Current Applied Physics, 5(5), pp. 485-488). Therefore, this system offers a promising approach to couple amide bonds in different proteins to carboxylic groups in paper sheets or cellulose-containing materials.

The smallest unit of cellulose from plants as basis for materials like paper and cotton are chains of 500 to 14,000 β-1,4-linked glucose molecules. In order to create new carboxylic groups to be used as coupling points, an oxidation of the lateral hydroxyl groups of the glucose subunits without destroying the cellulose backbone is necessary.

Thus, it is an object of the present invention to provide a method for coupling amino acid residues, peptides, polypeptides or proteins on cellulose comprising surfaces which does not or substantially not affect the overall structure and/or the subunits of the cellulose.

SUMMARY OF THE INVENTION

The present invention relates to a method for covalently binding at least one amino acid, at least one peptide and/or at least one polypeptide to a cellulosic material comprising cellulose and/or cellulose derivatives comprising free hydroxyl groups comprising the steps of

a) subjecting the cellulosic material to an aqueous solution, ionic liquids, deep eutectic solvents, organic solvents or mixtures, comprising at least one oxidizing agent and
b) binding said at least one amino acid, at least one peptide and/or at least one polypeptide to said cellulosic material.

It turned surprisingly out that the two-step process of the present invention enables the functionalization of cellulosic materials like paper surfaces and other cellulose containing materials with different amino acid, peptide, polypeptide or protein-based solutions, which impart the material new surface properties or catalytic functions. The method of the present invention is more environmentally friendly because step a) can be performed, for instance, using enzymes so that the use or the excess use of harmful organic solvents can be at least partially or totally be avoided. Additionally, due to the high number of different enzymes that can be coupled on the surface of the cellulosic material, the method is highly adaptable to multiple practical applications.

Another aspect of the present invention relates to a cellulosic material, preferably a cellulosic sheet material, comprising cellulose or a derivative thereof obtainable by the method of the present invention.

A further aspect of the present invention relates to a cellulosic material, preferably a cellulosic sheet material, comprising cellulose or a derivative thereof, wherein said cellulose or derivative thereof comprises at least one amino acid, at least one peptide and/or at least one polypeptide bound thereto via an amide group. Such a cellulosic material is also obtainable using the method of the present invention.

BRIEF DESCRIPTION OF THE FIGURES

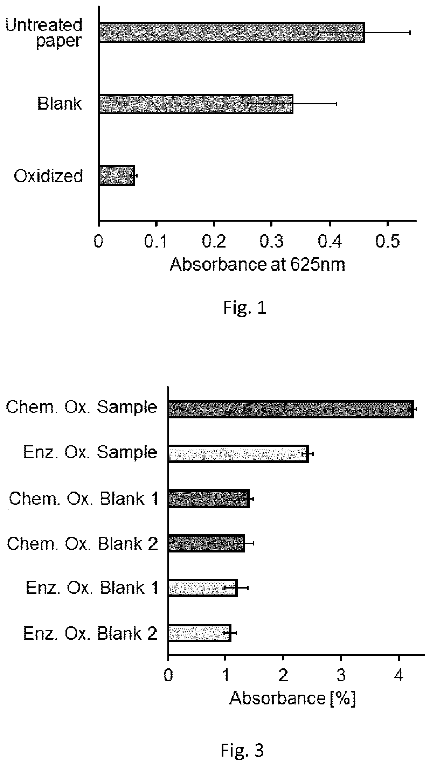

Fig. 1 shows the quantification of carboxylic groups introduced into paper sheets. Un-bound toluidine blue after staining was photometrically determined in the washing water after two washing steps. Untreated paper was only treated in buffer, while the Blank contained buffer, TEMPO and sodium chloride. The oxidized samples contained TEMPO, sodium chloride and sodium hypochlorite as oxidizing reagent. All experiments were conducted in triplicates and are presented showing the standard deviation.

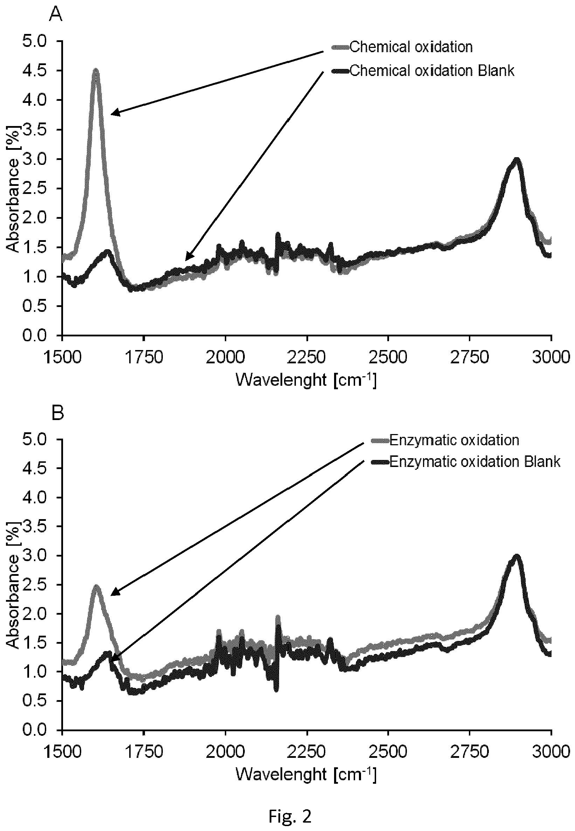

Fig. 2 shows the chemical and enzymatic oxidation of cellulose fibres using FTIR. Spectra was normalized in the 2850 2950 $cm^{-1}$, area and the determination of the carboxylic content was performed according to the absorbance at a wavelength of 1610 $cm^{-1}$. Chemically oxidized pulp fibres (A) and enzymatically oxidized pulp fibres (B). Chemical oxidation was conducted for 24 h and enzymatic oxidation for 48 h.

Fig. 3 shows the oxidation of cellulosic material using FTIR at 1610 $cm^{-1}$. Spectra were normalized in the 2850-2950 $cm^{-1}$, chemically oxidized pulp fibres (dark grey bars) and enzymatically oxidized pulp fibres (light grey bars). Chemical oxidation was conducted for 24 h and enzymatic oxidation for 48 h.

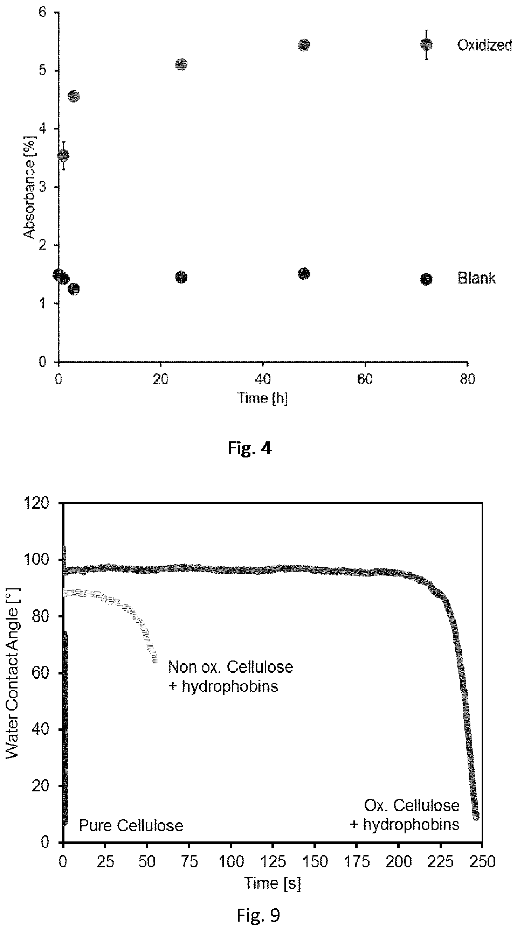

Fig. 4 shows the chemical oxidation of a white cellulose surface with sodium hypochlorite and TEMPO for 72 h as quantified by FTIR at a wavelength of 1605 cm-1 (normalisation from 2850-2950 $cm^{-1}$). All experiments were conducted in triplicates and are presented showing the standard deviation.

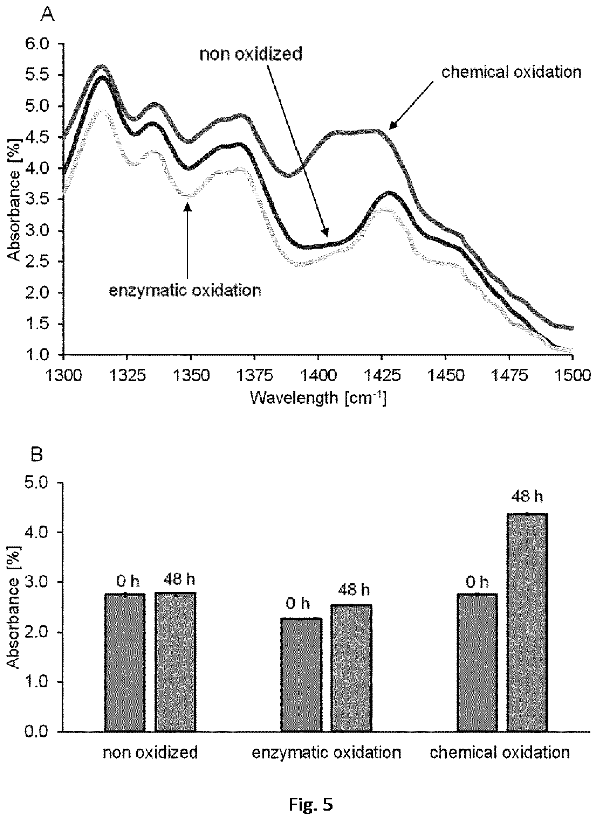

Fig. 5 shows differences in crystallinity of oxidized cellulose. Peak shift in absorbance for chemical oxidized fibres from 1430 to 1400 $cm^{-1}$ (A) and absorbance change at 1400 $cm^{-1}$ for non-oxidized, chemically oxidized and enzymatically oxidized fibres (B).

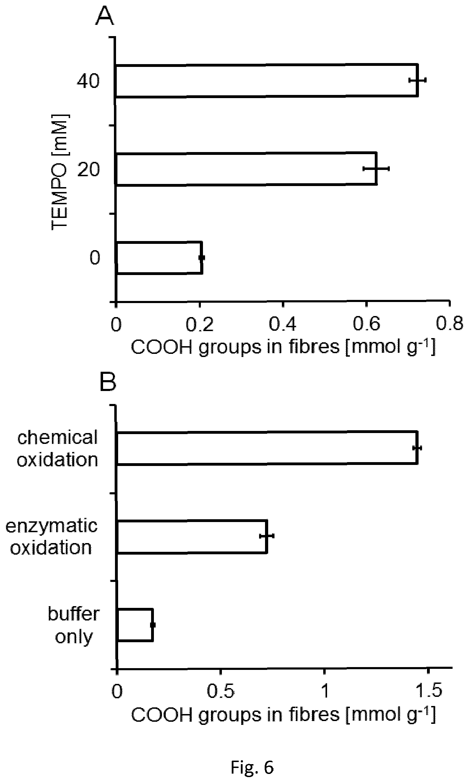

Fig. 6A. Enzymatic oxidation to evaluate the optimal TEMPO concentration. Determination of the carboxylic groups of the enzymatically-oxidized paper fibers via titration. Different concentrations of TEMPO under presence of pure oxygen for 48 h were used. All experiments were performed in triplicates and presented showing the standard deviation. Fig. 6B. Chemical oxidation vs. enzymatic oxidation. Comparison of the obtained carboxylic groups determined via titration for chemically and enzymatically oxidized paper fibres. All experiments were performed in triplicates and presented showing the standard deviation.

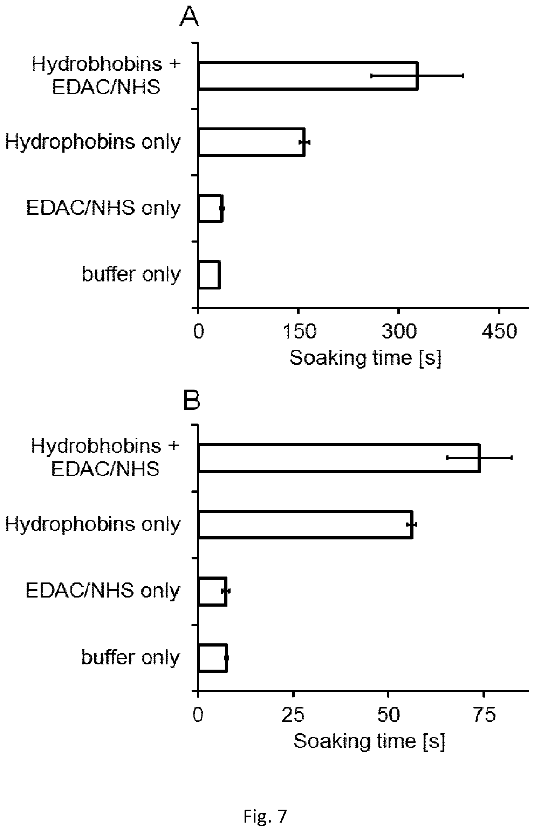

Fig 7 shows the determination of hydrophobicity for cellulose surfaces. Soaking time determination using contact angle measurements for various paper surfaces. Paper containing lignin (A) and paper composed of 100% cellulose (B).

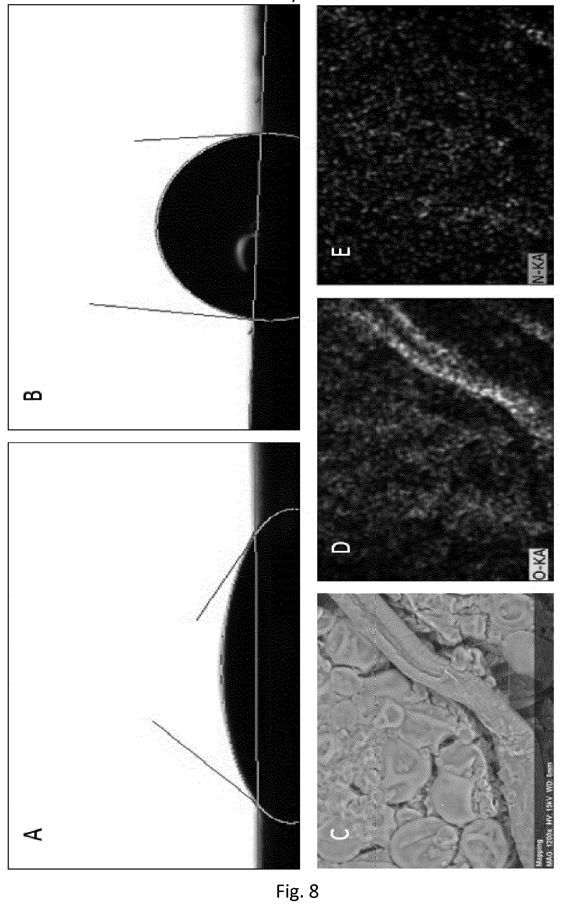

Fig. 8 shows the coupling of hydrophobins. Contact angle measurement (A-B) and SEM imaging (C-E) for paper sheets oxidized and EDAC/NHS coupled hydrophobins, Contact angle for non-oxidized material treated with hydrophobins (A), contact angle for oxidized and coupled surface (B), SEM image of a paper fibre with coupled hydrophobins (C), distribution of oxygen for the fibre visible before (D), nitrogen distribution for the same fibre (E).

Fig. 9 shows the hydrophobicity of fibres. Contact angle measurements of cellulose surfaces formed from fibres after chemical oxidation and hydrophobins coupling.

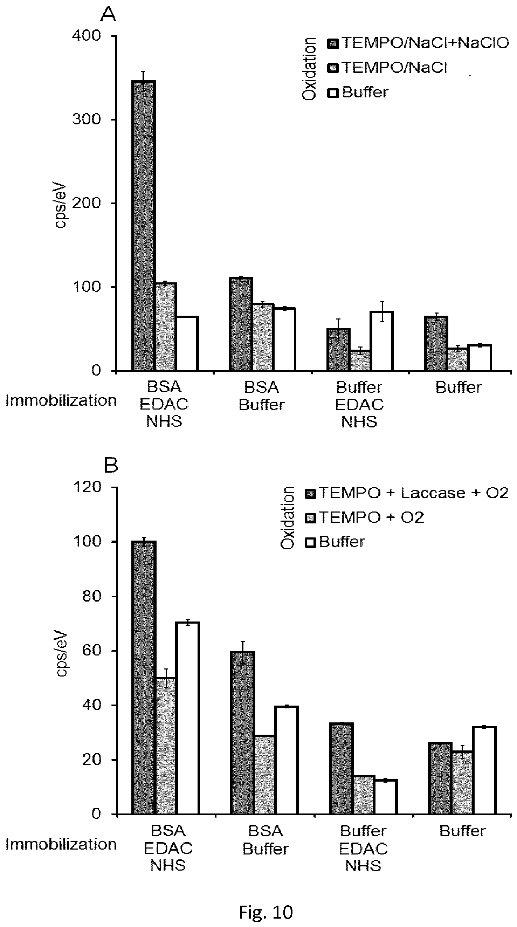

Fig. 10 shows the variations in nitrogen concentration after EDAC/NHS covalent coupling of BSA to chemically oxidized (A) and enzymatically oxidized cellulose (B). Nitrogen concentration on the cellulose fibers was monitored using SEM and the Quantax software.

DESCRIPTION OF EMBODIMENTS

The method of the present invention allows to couple/immobilize amino acid residues, peptides and polypeptides (including proteins) on a material which comprises cellulose or derivatives thereof.

In a first step of the method of the present invention a cellulosic material is subjected to an oxidizing agent present in an aqueous solution in order to obtain oxidized cellulose or derivatives thereof on the surface of said cellulosic material. In the course of this reaction step free hydroxyl groups present in the cellulose molecules are oxidized to give carboxylic groups. The carboxylic groups obtained from this reaction can be used to attach amino acids, peptides and polypeptides to the cellulose molecules. This binding is a result of the reaction of free amino groups present in amino acid residues, peptides and polypeptides and the carboxylic groups within the cellulosic material obtained by step a) of the method of the present invention.

"Cellulosic material", as used herein, refers to any material comprising cellulose, hemicellulose and/or lignocellulose and derivatives thereof as a significant component. Such materials can be obtained from plants such as wood including softwood and hardwood, herbaceous crops, agricultural residues etc. and are regularly processed to obtain paper, paper sheets, textile fibres such as cotton, fibres derived from cotton, linen, hemp and jute.

"Cellulose derivatives", as used herein, refer to any modified cellulose polymer including but not limited to paper, cotton and wood based products. The term cellulose derivative includes the various molecular weight species of the specific cellulose derivative including, but not limited to, methyl cellulose, hydroxyethyl cellulose, hydroxypropyl cellulose, hydroxypropyl methylcellulose, celluloses and combinations thereof.

"Oxidizing agents", as used herein, refer to agents capable to convert a hydroxyl group into a carboxylic group, preferably via an aldehyde group, thereby producing an oxidized polysaccharide.

According to a preferred embodiment of the present invention the at least one oxidizing agent is selected from the group consisting of (2,2,6,6-tetramethylpiperidin-1-yl)oxidanyl (TEMPO), sodium hypochlorite, sodium chlorite, 2,2'-azino-bis(3-ethylbenzothiazoline-6-sulphonic acid)(ABTS), syringaldazine, 2,6-dimethoxyphenol and dimethyl-p-phenylenediamine.

It turned out that the aforementioned oxidizing agents are well suited to oxidize the hydroxyl groups present in the cellulosic material into aldehyde groups and in the end into carboxyl groups.

When oxidizing the cellulosic material the at least one oxidising agent is reduced. In order to regenerate/oxidize the reduced form of the at least one oxidizing agent, preferably at least one of the aforementioned oxidizing agents, the aqueous solution comprises at least one oxidase.

Thus, according to a further preferred embodiment of the present invention the aqueous solution comprises at least one oxidase, preferably an oxidase selected from the group consisting of laccase, peroxidase, glucose oxidase, ascorbate oxidase, polysaccharide monooxygenase and manganese oxidase, to oxidase the reduced at least one oxidizing agent.

According to preferred embodiment of the present invention the cellulosic material is subjected in step a) to an aqueous solution comprising the at least one oxidase and at least one further oxidizing agent selected from the group consisting of (2,2,6,6-tetramethylpiperidin-1-yl)oxidanyl (TEMPO), 2,2'-azino-bis(3-ethylbenzothiazoline-6-sulphonic acid)(ABTS), syringaldazine, 2,6-dimethoxyphenol and dimethyl-p-phenylenediamine.

Alternatively, the reduced form of the at least one oxidizing agent may be regenerated/oxidized by at least one second oxidizing agent. The at least one second oxidizing agent may be chlorite or hypochlorite, preferably sodium hypochlorite or sodium chlorite, which can be part of the aqueous solution according to step a).

Thus, according to a further preferred embodiment of the present invention the cellulosic material is subjected in step a) to an aqueous solution comprising sodium hypochlorite and/or sodium chlorite and (2,2,6,6-tetramethylpiperidin-1-yl)oxidanyl (TEMPO) or 2,2'-azino-bis(3-ethylbenzothiazoline-6-sulphonic acid) (ABTS).

The aqueous solution used in step a) of the method of the present patent application preferably comprises the at least one oxidizing agent at a concentration of 0.1 mM to 500 mM, preferably 0.5 mM to 400 mM, more preferably 1 mM to 300 mM, more preferably 5 mM to 200 mM, more preferably 5 mM to 100 mM, more preferably 5 mM to 50 mM, more preferably 5 mM to 40 mM.

According to a preferred embodiment of the present invention the aqueous solution comprises at least one oxidizing agent selected from the group consisting of (2,2,6,6-tetramethylpiperidin-1-yl)oxidanyl (TEMPO), 2,2'-azino-bis(3-ethylbenzothiazoline-6-sulphonic acid)(ABTS), syringaldazine, 2,6-dimethoxyphenol and dimethyl-p-phenylenediamine at a concentration of 0.1 mM to 500 mM, preferably 0.1 mM to 400 mM, more preferably 0.1 mM to 300 mM, more preferably 0.1 mM to 200 mM, more preferably 0.1 mM to 100 mM, more preferably 0.1 mM to 50 mM, more preferably 0.1 mM to 40 mM, more preferably 0.1 mM to 15 mM, more preferably 0.1 mM to 10 mM, more preferably 0.1 mM to 5 mM, more preferably 0.1 mM to 2 mM, more preferably 0.2 mM to 2 mM, more preferably 0.3 mM to 2 mM, more preferably 0.5 mM to 2 mM, more preferably 0.7 mM to 1.5 mM, more preferably 0.8 mM to 1 mM, in particular 0.9 mM.

According to another preferred embodiment of the present invention the aqueous solution comprises at least one oxidizing agent selected from the group consisting of sodium hypochlorite and sodium chlorite at a concentration of 0.1 mM to 500 mM, preferably 0.5 mM to 400 mM, more preferably 1 mM to 300 mM, more preferably 10 mM to 200 mM, more preferably 10 mM to 150 mM, more preferably 10 mM to 120 mM, more preferably 10 mM to 100 mM.

In a particular preferred embodiment of the present invention the aqueous solution may comprise 50 mM to 200 mM, preferably 60 mM to 150 mM, more preferably 70 mM to 120 mM, more preferably 80 mM to 100 mM, more preferably 90 mM, sodium chlorite.

In another particular preferred embodiment of the present invention the aqueous solution may comprise 1 mM to 50 mM, preferably 5 mM to 20 mM, more preferably 10 mM to 15 mM, sodium hypochlorite.

According to a further preferred embodiment of the present invention the aqueous solution comprises at least one oxidase as oxidizing agent, preferably laccase, at a concentration of 0.5 to 5 $\mu$kat/ml$^{-1}$, preferably 0.8 to 4 $\mu$kat/ml$^{-1}$, more preferably 1 to 3 $\mu$kat/ml$^{-1}$, more preferably, 1.5 to 2 $\mu$kat/ml$^{-1}$, in particular 1.97 $\mu$kat/ml$^{-1}$.

According to a preferred embodiment of the present invention the aqueous solution comprises

a) at least one oxidizing agent selected from the group consisting of (2,2,6,6-tetramethylpiperidin-1-yl)oxidanyl (TEMPO), 2,2'-azino-bis(3-ethylbenzothiazoline-6-sulphonic acid)(ABTS), syringaldazine, 2,6-dimethoxyphenol and dimethyl-p-phenylenediamine at a concentration of 0.1 mM to 500 mM, preferably 0.1 mM to 400 mM, more preferably 0.1 mM to 300 mM, more preferably 0.1 mM to 200 mM, more preferably 0.1 mM to 100 mM, more preferably 0.1 mM to 50 mM, more preferably 0.1 mM to 40 mM, more preferably 0.1 mM to 15 mM, more preferably 0.1 mM to 10 mM, more preferably 0.1 mM to 5 mM, more preferably 0.1 mM to 2 mM, more preferably 0.2 mM to 2 mM, more preferably 0.3 mM to 2 mM, more preferably 0.5 mM to 2 mM, more preferably 0.7 mM to 1.5 mM, more preferably 0.8 mM to 1 mM, in particular 0.9 mM, and

b) at least one oxidizing agent selected from the group consisting of sodium hypochlorite and sodium chlorite at a concentration of 0.1 mM to 500 mM, preferably 0.5 mM to 400 mM, more preferably 1 mM to 300 mM, more preferably 10 mM to 200 mM, more preferably 10 mM to 150 mM, more preferably 10 mM to 120 mM, more preferably 10 mM to 100 mM .

According to another preferred embodiment of the present invention the aqueous solution comprises

a) at least one oxidizing agent selected from the group consisting of (2,2,6,6-tetramethylpiperidin-1-yl)oxidanyl (TEMPO), 2,2'-azino-bis(3-ethylbenzothiazoline-6-sulphonic acid)(ABTS), syringaldazine, 2,6-dimethoxyphenol and dimethyl-p-phenylenediamine at a concentration of 0.1 mM to 500 mM, preferably 0.1 mM to 400 mM, more preferably 0.1 mM to 300 mM, more preferably 0.1 mM to 200 mM, more preferably 0.1 mM to 100 mM, more preferably 0.1 mM to 50 mM, more preferably 0.1 mM to 40 mM, more preferably 0.1 mM to 15 mM, more preferably 0.1 mM to 10 mM, more preferably 0.1 mM to 5 mM, more preferably 0.1 mM to 2 mM, more preferably 0.2 mM to 2 mM, more preferably 0.3 mM to 2 mM, more preferably 0.5 mM to 2 mM, more preferably 0.7 mM to 1.5 mM, more preferably 0.8 mM to 1 mM, in particular 0.9 mM, and

b) at least one oxidase, preferably laccase, at a concentration of 0.5 to 5 $\mu$kat/ml$^{-1}$, preferably 0.8 to 4 $\mu$kat/ml$^{-1}$, more preferably 1 to 3 $\mu$kat/ml$^{-1}$, more preferably, 1.5 to 2 $\mu$kat/ml$^{-1}$, in particular 1.97 $\mu$kat/ml$^{-1}$.

According to a preferred embodiment of the present invention the cellulosic material is provided in the form of a sheet, preferably a lignin free or lignin containing paper sheet, fibers, preferably long fibers and/or short fibers from pulping processes, cord, cloth, fabric and composites thereof.

The method of the present invention allows to bind amino acid residues, peptides and polypeptides of any kind to any material comprising cellulose as far as the cellulosic material is found on the surface of said material. With this method it is possible to modify the surface of sheet material comprising cellulose or derivatives thereof. This is particularly advantageous because it is thus possible to modify sheet material like paper sheets (e.g. bank notes, passports, newspapers).

According to a further preferred embodiment of the present invention the at least one amino acid, at least one peptide and/or at least one polypeptide is bound in step b) to the cellulosic material by adding at least two activating reagents for carboxylic acids.

These activating reagents allow

According to a particularly preferred embodiment of the present invention at least two activating reagents for carboxylic acids are selected from the group consisting of N-hydroxysuccinimide (NHS), ethyl(dimethylaminopropyl) carbodiimide (EDC), dicyclohexylcarbodiimide (DCC) and mixtures thereof.

According to another preferred embodiment of the present invention the at least one amino acid, at least one peptide and/or at least one polypeptide is selected from the group of hydrophobin, Serin-hydrolases, lipases, laccases, cutinases, fluorescent proteins like green fluorescent protein, luminescent proteins, customized peptides and combinations thereof.

One of the major advantages of the present invention is the fact that the method of the present invention allows to immobilize/bind peptides and proteins of any kind to a cellulosic material such as sheet material like paper sheets. This makes it possible to modify surfaces of cellulosic material as desired. For instance, a cellulosic material may be made water repellent or marked with specific peptides and/or polypeptide to get an identification code for bank note or any other documents whose origin has to be proofed. Furthermore, fluorescent polypeptides on a cellulosic material may also be useful in some applications. Catalytic active substances coupled to paper and textiles can be used as biosensors and detecting devices in clothing or medical background. Wooden materials like furniture can be treated to impart antimicrobial properties as long as cellulose is available on the surface.

With the method of the present invention also enzymes or polypeptides having enzymatic activity may be bound to a cellulosic material. This has the advantage that a cellulosic material may be functionalized to have enzymatic activity on its surface. Enzymatic activity on a surface may be beneficial to show the origin of a cellulosic material, for instance, since the enzymatic activity can be used to perform biochemical reactions once contacted with a respective substrate.

Another aspect of the present invention relates to cellulosic material, preferably cellulosic sheet material, comprising cellulose or a derivative thereof obtainable by a method according to the present invention.

A further aspect of the present invention relates to a cellulosic material, preferably cellulosic sheet material, comprising cellulose or a derivative thereof, wherein said cellulose or derivative thereof comprises at least one amino acid, at least one peptide and/or at least one polypeptide bound thereto via an amide group.

According to a preferred embodiment of the present invention the at least one amino acid, peptide and/or at least one polypeptide is selected from the group of hydrophobin, Serin-hydrolases, lipases laccases, cutinases fluorescent proteins, luminescent proteins, customized peptides and combinations.

According to a further preferred embodiment of the present invention the sheet material is a bank note, passport or other document requiring a high level of security.

According to another preferred embodiment of the present invention the cellulosic material comprising the at least one amino acid, at least one peptide and/or at least one polypeptide bound thereto is obtainable by a method according to the present invention.

The present invention is further illustrated in the following example, however, without being restricted thereto.

EXAMPLE

***Materials and Methods***

*Cellulose Materials and Chemicals*

Three different cellulose surface materials were used for oxidation and coupling experiments: commercially available grade 1 filter paper (Whatman, United Kingdom), white paper (100% Cellulose) and brown paper (93-94% Cellulose 6-7% Lignin). Commercially available hydrophobins (BASF, Germany) were used for conducting the coupling experiments. Production details and properties of the used hydrophobins were outlined by Wohlleben et al. (Wohlleben, W. et al. (2010), European Biophysics Journal, 39(3), pp. 457-468.). Other chemicals and reagents were of analytical grade and purchased from Sigma-Aldrich and used without further purification if not stated.

*Chemical Oxidation of Paper Sheets*

Chemical oxidation was conducted in 100 mM sodium phosphate buffer pH 7. A 36 $cm^2$ area of paper was cut into squares and placed in glass bottles. 45 mL of 10 mM TEMPO and 100 mM $NaClO_2$ in buffer were added. Oxidation started after addition of 5 mL of 1% NaClO solution diluted in buffer. Blank samples were performed with buffer instead of NaClO solution. Samples were incubated at 21 °C and 100 rpm. Paper pieces were removed after 1, 3, 24, 48 and 72 h, washed three times with demineralized water and dried at 40 °C prior to Fourier Transform infrared spectroscopy (FTIR) and toluidine blue measurements, a method previously used for the detection of carboxylic groups on polymer surfaces (Goddard, J. M. and Hotchkiss, J. H. (2007), Progress in Polymer Science (Oxford), 32(7), pp. 698-725.). For the analysis, paper samples with an area of 2 $cm^2$ were treated with 3 mL 0.1% toluidine blue in TRIS-HCl buffer (0.1% TRIS, pH 8.6) for 15 min at 21 °C. Afterwards, samples were washed two times with 5 mL MQ water. The liquid phase of the second washing step was collected, centrifuged at 12,500 rpm for 10 min and its absorbance at 625 nm was measured using an Infinite Pro 2000 photometer (Tecan, Switzerland). For FTIR analysis, a Spectrum 100 Photometer (Perkin Elmer, US) was used. Spectra were collected at a resolution of 2 $cm^{-1}$ for 10 scans and normalized in the 2,850-2,950 $cm^{-1}$ region before any data processing. Bands in the 1,632-1,604 $cm^{-1}$ area (C=O) represent carboxylic groups. All experiments and measurements were conducted in triplicates.

*Coupling of Hydrophobins on Cellulose Surfaces (paper sheets)*

Hydrophobins were coupled on dried and oxidized paper sheets using the EDAC/NHS system which is known to form amide bonds between primary amines and carboxyl groups. The cellulose surfaces were placed in a petri dish and 3,600 µL of a 10 g $L^{-1}$ hydrophobins solution in 100 mM sodium phosphate buffer pH 6 was added. EDAC and NHS solutions contained 4 g $L^{-1}$ and 22 g $L^{-1}$ respectively in 100 mM sodium phosphate buffer pH 6. 400 µL of EDAC and 200 µL of NHS solution were added to each sample. The final reaction volume for each sample was of 4,100 µL.

The samples were incubated over night at 21 °C under slight agitation. Thereafter, samples were washed three times with demineralized water and dried at 40 °C till a constant weight was reached. Samples were than fixed with double-sided tape on microscopy slides and used for contact angle and scanning electron microscopy (SEM) analysis. Contact angle measurements were conducted with a DSA 100 Drop Shape analyser (Krüss, Germany). For analysis, 5 $\mu$L of ddH$_2$O were deposited on the paper material. The water contact angle was measured 1 s after the drop deposition and the soaking time was determined using the video recording mode.

Cellulose surfaces and fibres morphology of the samples was qualitatively assessed through SEM analysis. Control cellulose materials without any oxidation or coupling treatment were also surface characterized. All SEM images were acquired collecting secondary electrons on a Hitachi 3030TM (Metrohm INULA GmbH, Austria) table top microscope working at EDX acceleration voltage with the reduced vacuum mode. Elemental analysis for surfaces was performed for nitrogen and oxygen for the same picture frame.

*Coupling of Hydrophobins on chemically oxidized cellulose fibers*

160 mg oxidized pulp fibres were mixed with 9 mL of a 10 g l$^{-1}$ hydrophobins solution in 100 mM sodium phosphate buffer pH 6. Afterwards, 1 mL EDAC and 0.5 ml NHS solutions were added (see details on concentration above). Samples were incubated at 21 °C and 150 rpm for 10 h. A filtration step using a borosilicate filter (porosity of one) was conducted and the recovered fibres were washed two times with 100 mL demineralized water and dried overnight at 40 °C. The formed cellulosic surfaces were fixed with double-sided tape on microscope slides to obtain a flat surface. These samples were further used for contact angle and microscopy measurements as described above.

*Coupling of BSA on chemically-oxidized cellulose fibers*

600 mg paper fibres were mixed with 45 mL of a buffer solution (sodium phosphate 100 mM, pH 7) containing 10 mM TEMPO and 100 mM NaClO$_2$. Oxidation was started after addition of 5 mL of 1% NaClO diluted in buffer. After 24 h of reaction under agitation at 21 °C, the oxidation was stopped by filtration of the fibres with a Whatman filter paper grade 1 (Ø 8.5 cm). Fibres were washed two times with MQ water and dried overnight in an oven at 40 °C. The filter paper was weighted before filtration and after drying to estimate the fibre loss during oxidation. Oxidized fibres, immobilized on a filter paper circle, were placed in petri dishes and used for coupling experiments. Each sample contained 150 mg oxidized fibres. 14.4 mL of a laccase solution containing 12 mg mL$^{-1}$ enzyme in 100 mM sodium phosphate buffer pH 6 were added. EDAC and NHS solutions contained 4 g L$^{-1}$ and 22 g L$^{-1}$ respectively in buffer. 1,600 $\mu$L of EDAC and 800 $\mu$L of NHS solution were needed per sample. Samples were incubated overnight under slight agitation at 21 °C. After coupling, the filter sheets were washed by rinsing them with demineralized water three times. Coupling was visualized as described above with the elemental analysis using SEM.

*Enzymatic Oxidation of Fibres for titration of the carboxylic content*

750 mg of dried pulp were dissolved in 83 mL of 100 mM sodium phosphate buffer pH 7 containing 0, 20 or 40 mM TEMPO. For the oxidation, 1.5 mL of Myceliophtora themophila laccase with an activity of 111 $\mu$kat mL$^{-1}$ were added and all samples were supplied with 30 mL min$^{-1}$ pure oxygen for 48 h under agitation. After oxidation, the fibres were filtered using a borosilicate filter (porosity 3) and washed two times with 100mL of demineralized water for each washing step. The wet fibres were weighted, and 250 mg of the wet material was dried (40 °C) for FTIR analysis and to determine the amount of fibres for titration. To the wet fibres, 50 mL of 0.01 M HCl were added and stirred for 2 h. Fibres were filtered and washed again, before 50 mL demineralized water and 30 mL 250 mM Ca-Acetate solution were added. Samples were titrated with Phenolphthalein as indicator to the transition point with 0.01 M NaOH using a dosimeter. The number of carboxylic groups was calculated using Equation 1. All titration experiments were performed in triplicates.

Equation 1. Determination of carboxylic groups per g of cellulose fibres. V: Volumen of NaOH [mL], c: concentration of NaOH [mol L$^{-1}$], m: weight of fibres [g], w: moisture content of fibres [%]

$$mmol \frac{COOH}{g} = \frac{\frac{80}{30} * c(NaOH) * V(NaOH)}{m\left(1 - \frac{w}{100}\right)}$$

Laccase activity was assayed according to the procedure reported by Prasetyo et al. with some modifications (Nugroho Prasetyo, E. et al. (2009), Analytical and Bioanalytical Chemistry, 393(2), pp. 679-687. doi: 10.1007/s00216-008-2466-1.). ABTS was oxidized by laccase to its radical form and the change in absorbance was measured at 420 nm for 3 min using a U-2900 spectrophotometer (Hitachi, Japan). Laccase activity was measured at 21 °C in 100 mM sodium phosphate buffer pH 7 and expressed in katal (kat), which is the amount of enzyme that is necessary for the conversion of 1 mol ABTS per second.

*Coupling of Hydrophobins on Enzymatically Oxidized Cellulose Fibres*

After enzymatic oxidation with 40 mM TEMPO and washing as describe above the wet fibres were divided into four groups for coupling of hydrophobins. Group 1 contained EDAC/NHS and Hydrophobins, whereas group two contained only EDAC/NHS and group 3 contained only Hydrophobins. Group 4 was incubated without the coupling reagents and hydrophobins. On oxidized pulp fibres, 9 mL of hydrophobins solution (10 mg mL$^{-1}$) in 100 mM sodium phosphate buffer pH 6 were added. Afterwards, 1 mL EDAC and 0.5 mL NHS were added, using the concentrations as described above. Samples were incubated at 21 °C and 150 rpm for 24 h. A filtration step using a borosilicate filter (porosity of one) was conducted and the recovered fibres were washed two times with approx. 100 mL demineralized water and dried overnight at 40 °C. The formed cellulosic surfaces were fixed with double-sided tape on microscope slides to obtain a flat surface. These samples were further used for contact angle analysis.

### Results and Discussion

*Oxidation strategies*

The chemical oxidation of paper materials was qualitatively monitored by staining the carboxylic groups with toluidine blue. Fig. 1 illustrates the successful oxidation and reveals a limited oxidizing effect when only TEMPO and sodium chloride are present in the reaction media (Blank). The more carboxylic groups are present, the more dye is bound, and a lower absorbance can be measured in the supernatant. Since the oxidized sample shows a 7-fold lower absorbance, oxidation was effective. The toluidine blue coupling onto fibres depends on different mechanisms as investigated by Van de Ven et al. The authors conclude that the number of dye molecules in the fibre wall closely equals the number of carboxylic groups in the fibre but, toluidine blue can also couple to lignin, which makes a comparison of different papers with this method not optimal (van de Ven, T. G. M., et al. (2007), Physicochemical and Engineering Aspects, 294(1-3), pp. 1-7. doi: 10.1016/j.colsurfa.2006.07.040.). Therefore, in the present example, other methods were also taken into account for characterising the oxidation behaviour of the different oxidized substrates such as FTIR and titration methods.

*FTIR analysis of cellulosic materials*

Oxidation of paper sheets and fibres treated with sodium hypochlorite or laccase was analysed using the characteristic band for carboxylic groups and carbonyl groups around 1600 cm$^{-1}$ (Jausovec, D., Vogrincic, R. and Kokol, V. (2015), Carbohydrate Polymers, 116, pp. 74-85. doi: 10.1016/j.carbpol.2014.03.014.). Normalisation was performed in the 2850-2950 cm$^{-1}$ area, which represents a typical peak of cellulose (Oh, S. Y. et al. (2005), Carbohydrate Research, 340(15), pp. 2376-2391. doi: 10.1016/j.carres.2005.08.007.). Fig. 2 clearly indicates an increased absorbance around 1600 cm$^{-1}$, especially for chemically oxidized fibre samples. A peak shift from 1650 cm$^{-1}$ for untreated samples to 1611 cm$^{-1}$ for oxidized samples is visible for both treatments. It can be concluded that this shift is typically derived from the TEMPO mediated cellulose oxidation, regardless which oxidation strategy was applied (chemical or enzymatic). The same increase in intensity and shift was seen when paper sheets were oxidized instead of a solution which contained dispersed fibres.

Fig. 3 compares the changes in absorbance from Fig. 2 at a wavelength of 1610 cm$^{-1}$, for chemically and enzymatically oxidized pulp fibres including all performed blanks to exclude that changes in absorbance were caused by the single components. This means for chemical oxidation that fibres were treated with buffer only and with buffer and TEMPO/NaClO$_2$. Also, for enzymatic oxidation two blanks were performed, one containing fibres with TEMPO but no laccase and no oxygen and for the second one only the laccase enzyme was missing. The results presented in Fig. 3 clearly indicate the oxidation was catalysed by TEMPO regardless whether regenerated chemically or enzymatically.

From Fig. 2 and Fig. 3, a higher absorbance at the same wavelength is visible for enzymatically and chemically oxidized fibres. A successful oxidation of the used cellulosic material is therefore reported both for enzymatic and chemical oxidation treatments. Blanks show, that for enzymatic oxidation availability of TEMPO, laccase and oxygen is essential. For the chemical oxidation instead, TEMPO, NaClO$_2$ and NaClO are essential.

Absorbance at 1600 cm$^{-1}$ for chemical oxidation over time for paper sheets is shown in Fig. 4. Clearly oxidation took place in the first 24 h of the process, whereas after 24 h of reaction time oxidation degree did not change significantly. Hence, it can be stated for chemical oxidation, all sodium hypochlorite provided was consumed within 24 h. In contrast, enzymatic oxidation stops when no active enzyme is present in the system. Enzymes stop working when due to denaturation no functional enzyme is left. Reasons for enzyme denaturation in this system are versatile. Enzymatic oxidations were supplied with the mediator TEMPO and pure oxygen as electron acceptor for the laccase reaction; high radical and oxygen levels can increase enzyme denaturation due to unspecific oxidation in the enzyme molecule.

An important parameter for paper and cellulose in general is the crystallinity. FTIR analysis revealed not only changes in the typical region for carboxylic groups but also an additional peak and intensity shifts; in fact, at a wavelength of 1400 cm$^{-1}$, significant changes in absorbance between chemically oxidized and enzymatically oxidized and non-oxidized fibre samples were visible (Fig. 5). Here differences of the oxidation strategies besides introduction of -COOH groups is highlighted. For the enzymatic process, no major changes are visible as for the chemical process. Oh et al. for example, reported a shift from 1430 to a 1419 due to the transformation of cellulose after the treatment with 5, 10, 15, and 20% w/w NaOH respectively. In the present example, a similar shift is visible for the samples oxidized with sodium hypochlorite. This shift is typical for the transformation of cellulose I to cellulose II, which is a modification from natural cellulose by chemical transformation (Oh, S. Y. et al. (2005), Carbohydrate Research, 340(15), pp. 2376-2391.). Due to the lack of this shift for enzymatically oxidized paper (green and blue lines in Fig. 5), it can be concluded that the enzymatic oxidation is a less harsh modification approach only altering the cellulose's hydroxyl groups.

*Titration for determination of carboxylic content*

To receive comparable information about the efficiency of the different oxidation approaches, oxidized fibres were titrated to determine the amount of introduced carboxylic groups. Effects of different TEMPO concentrations for the enzymatic oxidation were compared and enzymatic oxidation versus chemical oxidation was assayed. Fig. 6A elucidates the effects of different TEMPO concentrations on the enzymatically oxidized cellulose fibres. It was observed that using a 20 mM TEMPO solution increases by three-fold the amount of carboxylic groups. A further concentration increase of the TEMPO solution to 40 mM is not remarkably influencing the COOH yield. The suitability of this method for the determination of the carboxyl groups was previously reported in several publications (Matamá, T., Casal, M. and Cavaco-Paulo, A. (2013), Cellulose, 20(1), pp. 409-416. doi: 10.1007/s10570-012-9827-9.), (Barbosa, L. C. A. et al. (2013), BioResources, 8(1), pp. 1043-1054. doi: 10.15376/biores.8.1.1043-1054.).

Comparing chemical and enzymatic oxidation shows an increase in carboxylic groups from around 0.2 mmol g$^{-1}$ to more than 1.4 mmol g$^{-1}$. In addition, bio-catalytic oxidation with MtL showed an increase in carboxylic content, which was about 50% of what was obtained with the chemical oxidation. Both systems were operated with an equal concentration of TEMPO as mediator. Variations in the oxidation behaviour between the two systems are most probably caused by differences in the redox potential of the enzyme and its chemical counterpart or by different oxidation pathways. Another reason could be the fact that for chemical oxidation sodium chlorite is used to support the further oxidation of the TEMPO converting carbonyl groups to carboxyl groups.

Direct comparison of the chemical with the enzymatic oxidation when the same TEMPO concentration was used is reported in Figure 6B. A two-fold higher effectiveness for the chemical-driven process was observed. Comparing these results to data presented in Fig. 1 and Fig. 2, a similar trend is confirming the reported data. Oxidation rate for chemical processes is about double as effective as enzymatic oxidation one.

*Coupling strategies*

After successful cellulose oxidation, proteins were coupled on the surface of the material. Covalent coupling was achieved using the EDAC/NHS system. To elucidate the changes or properties, the soaking time of a water droplet was measured. The soaking time was defined as the time that the water drop needs to disappear completely from the surface of the paper sheet. Fig. 7 shows a comparison of two different paper materials which were functionalised with hydrophobins. Paper A is a brown paper containing lignin whereas paper B is a 100% cellulose-based paper without any lignin portion. For both materials, a strong increase in the soaking time for paper with hydrophobins is visible compared to samples without hydrophobins (EDAC/NHS only and buffer only). This means that by our approach different cellulose containing materials can be independently altered drastically changing their water repellent behaviour. This hints on a general applicability of the hydrophobins treatment. For samples containing hydrophobins which were not covalently coupled -but simply adsorbed on the surface- an increase of the soaking time was also encountered. Samples with covalently coupled hydrophobins show the highest soaking time, so the most stable and water repellent layer can only be achieved when a covalent coupling step is performed. Different approaches of cellulose surface functionalization are present in literature. Bayer et al. presented ethyl-cyanoacrylate monomer solutions to functionalize cellulose (Bayer, I. S. et al. (2011), Applied Materials & Interfaces, 3, pp. 4024-4031.). Boufi et al. functionalized cellulose with silver and gold nanoparticles (Boufi, S. et al. (2011), Carbohydrate Polymers. Elsevier Ltd., 86(4), pp. 1586-1594. doi: 10.1016/j.carbpol.2011.06.067.). Vismara et al. obtained hydrophobic material by grafting of glycidylmethacrylate. The properties of this material were changed in a second step to hydrophilicity by ring opening of the grafted molecule (Vismara, E. et al. (2009), Journal of Hazardous Materials, 170(2-3), pp. 798-808. doi: 10.1016/j.jhazmat.2009.05.042.).

All these methods, despite elegant and innovative, contain toxic and non-renewable materials and have the drawback of not being scalable for large-scale production and limited to a narrow field of applications.

To proof changes of the surface caused by hydrophobins, the initial contact angle of the surface was investigated after a water drop was deposited on the altered material. These WCA studies were summarized in Fig. 8. The water drop in image A (Figure 8A) shows a drop disappearing directly after deposition (t<5 sec). In image B (Figure 8B) a water drop on paper coated with hydrophobins shows a contact angel of around 90° directly after deposition on the surface (red lines). The hydrophobins not only increase the soaking time but also the initial contact angle, which clearly proofs the hydrophobicity of the functionalized material. Figure 8C-E show the same section of a cellulose fibre in a sheet and its corresponding elemental analysis for oxygen (8D) and nitrogen (8E). In the SEM image (Figure 8C), a cellulose fibre is visible surrounded by hydrophobins spheres. Image D presents a remarked turquoise line, which reflects the high oxygen amount in the cellulose fibres whereas the surrounding area is darker and homogenously coloured. In contrast to that, in image E the distribution of the orange colour is the same over the whole area, also where the fibre is located. This means that hydrophobins were coupled on the fibre since nitrogen can only derive from added proteins and not from cellulosic material.

Using the unique properties of hydrophobins in functionalization of materials was shown before on several other substrates. Laaksonen et al. showed functionalization of graphene with hydrophobins (Laaksonen, P. et al. (2010), Angewandte Chemie - International Edition, 49(29), pp. 4946-4949. doi: 10.1002/anie.201001806.) while Opwis and Gutmann thermally deposited hydrophobins on polyester, polyamide and cotton (Opwis, K. and Gutmann, J. S. (2011), Textile Research Journal, 81(15), pp. 1594-1602. doi: 10.1177/0040517511404599.). Moreover, a functionalization with hydrophobins was also shown for metals, plastics, glassy carbon electrode and carbon nanotubes (Piscitelli, A. et al. (2017), Biomolecules, 7(3). doi: 10.3390/biom7030045.). In contrast to these previous reports, the here presented process can be applied to temperature sensitive materials and the coupling is covalent to the substrate. Additionally, all reactions can be performed in liquid phase therefore maximizing the mass-transfer of the process.

Oxidation and functionalization were not only performed on cellulose surfaces like paper, but also on pulp fibres. Fig. 9 demonstrates the successful oxidation, functionalization and surface formation of fibres. The materials were chemically oxidized, washed and then functionalized similarly to the paper sheets discussed above. Afterwards, the fibres were washed, filtrated and, by simple drying, a homogeneous surface was generated that allowed to measure contact angles and soaking times. Initial contact angles for hydrophobins containing samples are similar for fibres and surfaces (Figure 8A and 9). So the limit of the achievable initial contact angle with the here used hydrophobins and cellulose materials seems to be around 90°, independently if the coupling occurred on a paper sheet or on the fibres in liquid media. A better accessibility of the cellulose surface, as in the case of fibres, is not dramatically changing the properties of the end material also because only the surface behaviour is considered. However, coupling to fibres is preferable toward paper sheet coupling because of the larger contact zone of free fibres in a solution that improves the mass-transfer and therefore the efficiency of the coupling reaction. Additionally, higher soaking times could be observed for functionalized fibres than for surfaces. The soaking time for a lignin free surface was around 70 s (compare Fig. 8B), whereas lignin-free fibres had a soaking time of about 250 s. This makes coupled fibres 3.5 times more water repellent than surface sheets, according to the soaking time data, most probably because the bulk portion of the newly generated sheets also contains coupled hydrophobic proteins. Was good to observe that these effects could not be detected for samples containing hydrophobins without coupling reagents. For these samples, it did not make any differences if a paper sheet surface or the free fibres were treated. For both setups, the soaking time is around 55 s. This means that non-covalently coupled hydrophobins (adsorbed) get pushed away by water drops. The coupling reagents therefore fulfil the important function of stabilize the water repellent layer of the fibres. Surface formation was not hindered due to hydrophobins coupling on the material. Besides this, the hydrophobic character of the proteins was maintained during the covalent coupling reaction. This makes protein coupling with the EDAC/NHS system on oxidized samples a promising tool for the functionalization of other materials. In this context, it has also to be considered that a water-repellent surface with hydrophobins can only be achieved if the orientation of the responsible protein domains is equal for all coupled proteins. It can be stated that also this natural occurring effect is not influenced by the used coupling reagents.

It is the first time that covalent coupling of hydrophobins to a polymeric surface was performed. Different fusion and coupling processes with hydrophobins were described in literature. Schulz et al. described protein fusion of a cytochrome monooxygenase and hydrophobins to increase the coupling efficiency between the monooxygenase and its redox partner (Schulz, S. et al. (2016), Frontiers in Bioengineering and Biotechnology, 4(July), pp. 1-12. doi: 10.3389/fbioe.2016.00057.) and Ribitsch et al. enhanced the ability of cutinase to enhance the degradation of poly(ethylene terephthalate) by fusion with hydrophobins (Ribitsch, D. et al. (2015), Applied and Environmental Microbiology, 81(11), pp. 3586-3592. doi: 10.1128/AEM.04111-14.). These applications describe the expression of a fused protein, nevertheless they proof, that it is possible to couple covalently the hydrophobic proteins while maintaining their original properties.

*Coupling of BSA on oxidized cellulose*

Besides surface alteration of cellulose with hydrophobins other proteins offer interesting properties worth of investigation. Capability of the oxidation and coupling technique was tested with BSA as a model substrate for soluble proteins. On a protein chain length of 583 amino acids, Hirayama et al. reported 20 glutamine and 13 asparagine residues in BSA. These amino acids are distributed along the primary structure of the protein beginning at position 29 and ending at 597. Asparagin and glutamine offer a primary amino group in proteins, which can be used for coupling as long as the tertiary structure of the protein allows it (Hirayama, K. et al. (1990), Biochemical and Biophysical Research Communications, 173(2), pp. 639-646.).

Clearly, both oxidation strategies enable the coupling of BSA on cellulose. Higher nitrogen contents were determined for samples first oxidized and that incubated with BSA in combination with EDAC/NHS. The low nitrogen concentrations detected in samples containing only cellulose and buffer can be explained by nitrogen impurities present in the industrial cellulose (Fig. 10). Furthermore, the already observed trend that indicates that enzymatic oxidation is less effective than the chemical procedure can be also observed regarding the nitrogen content evaluation (Fig 10B). Comparing figures 2, 7 and 10 shows that a lower oxidation results in less detectable nitrogen after coupling when enzymatic oxidation is performed. For chemical oxidized samples the coupling results clearly indicate the highest amount of bound protein. For enzymatically oxidized samples containing BSA but no coupling regents, BSA most probably got coupled to the fibers in tiny amounts. These higher nitrogen concentrations (if compared to the chemical oxidation blank reactions) can be explained by the fact that laccase, the enzyme used for the oxidation, is a biocatalyst containing nitrogen and the unspecific adsorption/attachment of substances to the cellulosic material can be not be completely excluded. The results show also an increased degree of coupled enzymes when the coupling reagents are present in the system. Due to different surface properties of the inhomogeneous cellulose fibres material, results for protein detection can vary within a sample. For this reason, the detection of decreasing protein concentration during the coupling mechanism is of high interest.

**Claims**

1.    Method for covalently binding at least one amino acid, at least one peptide and/or at least one polypeptide to a cellulosic material comprising cellulose and/or cellulose derivatives comprising free hydroxyl groups comprising the steps of

        a) subjecting the cellulosic material to an aqueous solution, ionic liquids, deep eutectic solvents, organic solvents or mixtures, comprising at least one oxidizing agent and
        b) binding said at least one amino acid, at least one peptide and/or at least one polypeptide to said cellulosic material.

2.    Method according to claim 1, wherein the at least one oxidizing agent is selected from the group consisting of (2,2,6,6-tetramethylpiperidin-1-yl)oxidanyl (TEMPO), sodium hypochlorite, sodium chlorite, 2,2'-azino-bis(3-ethylbenzothiazoline-6-sulphonic acid)(ABTS), syringaldazine, 2,6-dimethoxyphenol and dimethyl-p-phenylenediamine.

3.    Method according to claim 1 or 2, wherein the aqueous solution comprises at least one oxidase, preferably an oxidase selected from the group consisting of laccase, peroxidase, glucose oxidase, ascorbate oxidase, polysaccharide monooxygenase and manganese oxidase, to oxidase the reduced at least one oxidizing agent.

4.    Method according to claim 3, wherein the cellulosic material is subjected in step a) to an aqueous solution comprising the at least one oxidase and at least one further oxidizing agent selected from the group consisting of (2,2,6,6-tetramethylpiperidin-1-yl)oxidanyl (TEMPO), 2,2'-azino-bis(3-ethylbenzothiazoline-6-sulphonic acid)(ABTS), syringaldazine, 2,6-dimethoxyphenol and dimethyl-p-phenylenediamine.

5.    Method according to any one of claims 1 to 4, wherein the cellulosic material is subjected in step a) to an aqueous solution comprising sodium hypochlorite and/or sodium chlorite and (2,2,6,6-tetramethylpiperidin-1-yl)oxidanyl (TEMPO)or 2,2'-azino-bis(3-ethylbenzothiazoline-6-sulphonic acid) (ABTS)..

6.    Method according to any one of claims 1 to 5, wherein the aqueous solution comprises the at least one oxidizing agent at a concentration of 0.1 mM to 500 mM, preferably 0.5 mM to 400 mM, more preferably 1 mM to 300 mM, more preferably 5 mM to 200 mM, more preferably 5 mM to 100 mM, more preferably 5 mM to 50 mM, more preferably 5 mM to 40 mM.

**7.** Method according to any one of claims 1 to 6, wherein the aqueous solution comprises at least one oxidizing agent selected from the group consisting of (2,2,6,6-tetramethylpiperidin-1-yl)oxidanyl (TEMPO), 2,2'-azino-bis(3-ethylbenzothiazoline-6-sulphonic acid)(ABTS), syringaldazine, 2,6-dimethoxyphenol and dimethyl-p-phenylenediamine at a concentration of 0.1 mM to 500 mM, preferably 0.1 mM to 100 mM, more preferably 0.1 mM to 15 mM, more preferably 0.1 mM to 2 mM, more preferably 0.5 mM to 2 mM, more preferably 0.8 mM to 1 mM.

**8.** Method according to any one of claims 1 to 7, wherein the aqueous solution comprises at least one oxidizing agent selected from the group consisting of sodium hypochlorite and sodium chlorite at a concentration of 0.1 mM to 500 mM, preferably 0.5 mM to 400 mM, more preferably 1 mM to 300 mM, more preferably 10 mM to 200 mM, more preferably 10 mM to 150 mM, more preferably 10 mM to 120 mM, more preferably 10 mM to 100 mM.

**9.** Method according to any one of claims 1 to 8, wherein the aqueous solution comprises at least one oxidase as oxidizing agent, preferably laccase, at a concentration of 0.5 to 5 $\mu$kat/ml$^{-1}$, preferably 0.8 to 4 $\mu$kat/ml$^{-1}$, more preferably 1 to 3 $\mu$kat/ml$^{-1}$, more preferably, 1.5 to 2 $\mu$kat/ml$^{-1}$.

**10.** Method according to any one of claims 1 to 9, wherein the cellulosic material is provided in the form of a sheet, preferably a lignin free or lignin containing paper sheet, fibers, preferably long fibers and/or short fibers from pulping processes, cord, cloth, fabric and composites thereof.

**11.** Method according to any one of claims 1 to 10, wherein the at least one amino acid, at least one peptide and/or at least one polypeptide is bound in step b) to the cellulosic material by adding at least two activating reagents for carboxylic acids.

**12.** Method according to claim 11, wherein the at least two activating reagents for carboxylic acids are selected from the group consisting of N-hydroxysuccinimide (NHS), ethyl(dimethylaminopropyl) carbodiimide (EDC), dicyclohexylcarbodiimide (DCC) and mixtures thereof.

**13.** Method according to any one of claims 1 to 12, wherein the at least one amino acid, at least one peptide and/or at least one polypeptide is selected from the group of hydrophobin, Serin-hydrolases, lipases, laccases, cutinases, fluorescent proteins, luminescent proteins, customized peptides and combinations thereof.

**14.** Cellulosic material, preferably cellulosic sheet material, comprising cellulose or a derivative thereof obtainable by a method according to any one of claims 1 to 13.

**15.** Cellulosic material according to claim 14, wherein the at least one amino acid, peptide and/or at least one polypeptide is selected from the group of hydrophobin, Serin-hydrolases, lipases, laccases, cutinases fluorescent proteins, luminescent proteins, customized peptides and combinations.

**16.** Cellulosic material according to claim 14 or 15, wherein the sheet material is a bank note, passport or other document requiring a high level of security.

Fig. 1

Fig. 3

A

B

Fig. 2

**Fig. 4**

Fig. 9

Fig. 5

Fig. 6

Fig. 7

Fig. 8

Fig. 10

Europäisches
Patentamt

European
Patent Office

Office européen
des brevets

**EUROPEAN SEARCH REPORT**

Application Number

EP 18 20 9503

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | E. VAN LEEMPUTIES ET AL: "Immobilization of trypsin on partially oxidized cellulose", BIOTECHNOLOGY AND BIOENGINEERING, vol. 16, no. 7, 1 July 1974 (1974-07-01), pages 997-1003, XP055588023, ISSN: 0006-3592, DOI: 10.1002/bit.260160712 | 1,6,10, 13-16 | INV. C08B15/04 C08B15/06 D21C9/10 D06M15/15 |
| Y | * page 997 - page 998 * | 3,4 | |
| X | WO 2012/161708 A1 (EMPIRE TECHNOLOGY DEV LLC [US]; CHEN SUNG-WEI [US] ET AL.) 29 November 2012 (2012-11-29) | 1,2,6, 14,16 | |
| Y | * paragraph [0019] - paragraph [0024]; claims; figures 1,2; examples * | 3,4 | |
| A | US 6 919 447 B2 (WEYERHAEUSER CO [US]) 19 July 2005 (2005-07-19) * claims; examples * | 1-16 | |
| X | SAÏD BARAZZOUK ET AL: "Amino Acid and Peptide Immobilization on Oxidized Nanocellulose: Spectroscopic Characterization", NANOMATERIALS, vol. 2, no. 4, 12 December 2012 (2012-12-12), pages 187-205, XP055311356, CH ISSN: 2079-4991, DOI: 10.3390/nano2020187 | 1,2,5-8, 10-16 | TECHNICAL FIELDS SEARCHED (IPC) C08B D21H D06Q D21C D06M |
| Y | * the whole document * | 3,4 | |

-/--

The present search report has been drawn up for all claims

| Place of search | Date of completion of the search | Examiner |
|---|---|---|
| Munich | 14 May 2019 | Vaccaro, Eleonora |

EPO FORM 1503 03.82 (P04C01)

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SAÏD BARAZZOUK ET AL: "Tryptophan-based peptides grafted onto oxidized nanocellulose", CELLULOSE, KLUWER ACADEMIC PUBLISHERS (DORDRECHT), NL, vol. 19, no. 2, 7 December 2011 (2011-12-07), pages 481-493, XP035016999, ISSN: 1572-882X, DOI: 10.1007/S10570-011-9633-9 | 1,2,5-8, 10-16 | |
| Y | * the whole document * | 3,4 | |
| X | RAMON WEISHAUPT ET AL: "TEMPO-Oxidized Nanofibrillated Cellulose as a High Density Carrier for Bioactive Molecules", BIOMACROMOLECULES, vol. 16, no. 11, 28 September 2015 (2015-09-28), pages 3640-3650, XP055303610, US ISSN: 1525-7797, DOI: 10.1021/acs.biomac.5b01100 | 1,2,5-8, 10-16 | |
| Y | * page 3641 - page 3643; table 1 * | 3,4 | TECHNICAL FIELDS SEARCHED (IPC) |
| Y | WO 99/23117 A1 (VALTION TEKNILLINEN [FI]; VIIKARI LIISA [FI] ET AL.) 14 May 1999 (1999-05-14) * claim 3; examples * | 3,4 | |
| A | WO 2008/110456 A2 (CIBA HOLDING INC [CH]; GABOR ESTHER [DE] ET AL.) 18 September 2008 (2008-09-18) * claims; examples * | 1-16 | |

The present search report has been drawn up for all claims

| Place of search | Date of completion of the search | Examiner |
|---|---|---|
| Munich | 14 May 2019 | Vaccaro, Eleonora |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 3 660 056 A1

### ANNEX TO THE EUROPEAN SEARCH REPORT
### ON EUROPEAN PATENT APPLICATION NO.

EP 18 20 9503

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2019

| Patent document cited in search report | | Publication date | Patent family member(s) | | Publication date |
|---|---|---|---|---|---|
| WO 2012161708 | A1 | 29-11-2012 | CN | 103502321 A | 08-01-2014 |
| | | | US | 2012297555 A1 | 29-11-2012 |
| | | | WO | 2012161708 A1 | 29-11-2012 |
| US 6919447 | B2 | 19-07-2005 | CA | 2383464 A1 | 06-12-2002 |
| | | | EP | 1264845 A2 | 11-12-2002 |
| | | | JP | 2003089701 A | 28-03-2003 |
| | | | US | 2003083491 A1 | 01-05-2003 |
| | | | US | 2004266728 A1 | 30-12-2004 |
| | | | US | 2005014669 A1 | 20-01-2005 |
| WO 9923117 | A1 | 14-05-1999 | AU | 1035199 A | 24-05-1999 |
| | | | FI | 974139 A | 05-05-1999 |
| | | | WO | 9923117 A1 | 14-05-1999 |
| WO 2008110456 | A2 | 18-09-2008 | AU | 2008225890 A1 | 18-09-2008 |
| | | | CA | 2679719 A1 | 18-09-2008 |
| | | | DK | 2134901 T3 | 15-02-2016 |
| | | | EP | 2134901 A2 | 23-12-2009 |
| | | | US | 2010330384 A1 | 30-12-2010 |
| | | | WO | 2008110456 A2 | 18-09-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HUI, Y. et al.** *Advances in Colloid and Interface Science,* 2011, vol. 163 (1), 23-38
- **ARAUJO, A. C. et al.** *Analytical Chemistry,* 2012, vol. 84, 3311-3317
- **NISHIO, Y.** *Advances in Polymer Science,* 2006, vol. 205, 97-151
- **ORTNER, A. et al.** Green Chemistry. Royal Society of Chemistry, 2017, vol. 19, 816-822
- **SCHOLTMEIJER.** *Bio-mediacal materials and engineering,* 2004, vol. 14, 447-454
- **DAMINK, L. H. H. O. et al.** *Biomaterials,* 1996, vol. 17 (8), 765-773
- **WANG, C. et al.** *Langmuir,* 2011, vol. 27 (19), 12058-12068
- **CHUNG, H. J. et al.** *Current Applied Physics,* 2005, vol. 5 (5), 485-488
- **WOHLLEBEN, W. et al.** *European Biophysics Journal,* 2010, vol. 39 (3), 457-468
- **GODDARD, J. M. ; HOTCHKISS, J. H.** *Progress in Polymer Science (Oxford),* 2007, vol. 32 (7), 698-725
- **NUGROHO PRASETYO, E. et al.** *Analytical and Bioanalytical Chemistry,* 2009, vol. 393 (2), 679-687
- **VAN DE VEN, T. G. M. et al.** *Physicochemical and Engineering Aspects,* 2007, vol. 294 (1-3), 1-7
- **JAUŠOVEC, D. ; VOGRINČIČ, R. ; KOKOL, V.** *Carbohydrate Polymers,* 2015, vol. 116, 74-85
- **OH, S. Y. et al.** *Carbohydrate Research,* 2005, vol. 340 (15), 2376-2391
- **MATAMÁ, T. ; CASAL, M. ; CAVACO-PAULO, A.** *Cellulose,* 2013, vol. 20 (1), 409-416
- **BARBOSA, L. C. A. et al.** *BioResources,* 2013, vol. 8 (1), 1043-1054
- **BAYER, I. S. et al.** *Applied Materials & Interfaces,* 2011, vol. 3, 4024-4031
- **BOUFI, S. et al.** Carbohydrate Polymers. Elsevier Ltd, 2011, vol. 86, 1586-1594
- **VISMARA, E. et al.** *Journal of Hazardous Materials,* 2009, vol. 170 (2-3), 798-808
- **LAAKSONEN, P. et al.** *Angewandte Chemie - International Edition,* 2010, vol. 49 (29), 4946-4949
- **OPWIS, K. ; GUTMANN, J. S.** *Textile Research Journal,* 2011, vol. 81 (15), 1594-1602
- **PISCITELLI, A. et al.** *Biomolecules,* 2017, vol. 7 (3
- **SCHULZ, S. et al.** *Frontiers in Bioengineering and Biotechnology,* 04 July 2016, 1-12
- **RIBITSCH, D. et al.** *Applied and Environmental Microbiology,* 2015, vol. 81 (11), 3586-3592
- **HIRAYAMA, K. et al.** *Biochemical and Biophysical Research Communications,* 1990, vol. 173 (2), 639-646